# EUROPEAN PATENT SPECIFICATION

(11) **EP 2 017 174 B1**
(45) Date of publication and mention of the grant of the patent: **15.01.2014**
(21) Application number: 08252434.9
(22) Date of filing: 17.07.2008
(51) Int. Cl.: B62K 19/46, B60R 16/04, H01M 2/10, B62J 6/18

(54) **Straddle type vehicle**
Grätschsitz-Fahrzeug
Véhicule de type monté à califourchon

(30) Priority: 19.07.2007 JP 2007188739; 19.07.2007 JP 2007188738; 18.06.2008 JP 2008159686
(43) Date of publication of application: 21.01.2009
(73) Proprietor: Yamaha Hatsudoki Kabushiki Kaisha, Iwata-shi, Shizuoka 438-8501 (JP)
(72) Inventor: Hirayama, Yosuke, Iwata-shi Shizuoka-ken 438-8501 (JP); Okamoto, Naoki, Iwata-shi Shizuoka-ken 438-8501 (JP)
(74) Representative: Moreland, David

(56) References cited:
- EP-A- 1 108 644
- EP-A- 1 275 830
- EP-A- 1 772 360
- JP-A- 3 258 677

## Description

### FIELD OF THE INVENTION

The present invention relates to a straddle type vehicle, in particular, a straddle type vehicle including a battery housing part under a seat.

### BACKGROUND TO THE INVENTION

Some straddle type vehicles have a housing box (a so-called helmet housing box) disposed for housing articles (for example, a helmet) beneath a seat. Further, there are many vehicles having vehicle equipment such as a fuel tank and a battery disposed adjacent to the housing box. For example, JP-A-2002-225765 discloses a motorcycle in which a housing box is mounted on a vehicle body frame, a fuel tank is disposed in the rear of the housing box, a battery housing part for housing a battery is provided in the rear of the housing box and in front of the fuel tank.

In the technique in JP-A-2002-225765, the battery housing part is provided in the rear of the housing box. Thereby, without a space around the fuel tank being occupied by the battery, a capacity of the tank can be secured by expanding the fuel tank in fore-and-aft and transverse directions. With such a battery disposition, the battery having a relatively large weight is disposed rearward from an engine also having a large weight. In other words, heavy loads are distributed in the vehicle fore-and-aft direction. Therefore, operability of the vehicle may deteriorate due to deterioration in driving characteristics of the motorcycle.

EP 1 275 830 describes a scooter having an engine unit pivoted for vertical swing mounted behind a footrest. A carburettor is connected to an air outlet formed on the top surface of an air cleaner. The area below a seat is surrounded with part of a vehicle cover and a side cover. An article box is formed in the side cover. A bottom portion of the article holding box is sink-formed to be a battery holding portion in which a battery is held.

EP 1 108 644 describes a two-wheeled vehicle having a battery in front of a luggage box 61 and the luggage box and battery being covered by a lower seat cover. The engine of the vehicle is located beneath and towards the rear of the luggage box.

EP 1 772 360 and JP3-258677 both describe scooters having a battery mounting section located within a luggage storage box. The engine of the scooter is below and towards the rear of the storage box.

The present invention is made in consideration of such a problem, and has a main object to provide a straddle type vehicle having a heavy load disposition by which heavy loads are concentrated to improve operability of the vehicle.

### SUMMARY OF THE INVENTION

Various aspects of the present invention are defined in the independent claim 1. Some preferred features are defined in the dependent claims 2 - 15.

Described herein is a straddle type vehicle having a helmet and a battery disposed under a seat, including: a helmet housing box having an opening at a top surface thereof for putting in and out a helmet; an engine disposed in front of the helmet housing box in the vehicle direction and below the helmet housing box; a fuel spray device disposed above the engine; and a battery housing part disposed in front of the helmet housing box in the vehicle direction and in a position above the fuel spray device, in which the battery is housed in the battery housing part.

The battery housing part may have a bottom hole passing through a bottom surface of the battery housing part. A support for supporting the battery may be detachably attached to the bottom hole.

The support may have such a shape that only a part supporting the battery partially protrudes above the bottom of the battery housing part.

The fuel spray device may be a carburetor, and the support may be in the shape of a board and may be in such a mode that a part supporting the battery on a bottom surface thereof is recessed corresponding to the carburetor.

The fuel spray device may be a fuel injection system, and the support may be formed such that an upper surface thereof is generally flush with the bottom of the battery housing part.

A plurality of types of the support of different height supporting the battery in the battery housing part may be selectively attached to the bottom of the battery housing part.

The support may comprise a metal member.

A lid serving as a part of an inner wall of the helmet housing box may be provided at a boundary between the battery housing part and the helmet housing box.

Electrical equipment disposed around the helmet housing box and connected to the battery by a wire, a first coupler connected to the end of wiring extended from the electrical equipment, and a coupler retainer for fixing the first coupler are provided, in which the battery housing part is connected to the helmet housing box, the electrical equipment is housed in an electrical equipment housing part connected to the helmet housing box, and the first coupler fixed by the coupler retainer is connected to a second coupler connected to the end of wiring extended from an external member.

The electrical equipment may include a starter relay, and the external member may comprise a starter motor provided to an engine of the straddle type vehicle.

A clasp for hooking a rear part of a case of the first coupler may be formed on the coupler retainer.

A latch member for latching a middle part of a case of the first coupler by surrounding the middle part may be provided on the coupler retainer, a protruding portion may be formed on the case of the first coupler, and a groove for guiding the first coupler by fitting the protruding portion formed on the first coupler may be formed on the latch member.

A first inner lid may be provided between the helmet housing box and the battery housing part, and a second inner lid may be provided between the helmet housing box and the electrical equipment housing part.

The first inner lid and the second inner lid may be fixed on the helmet housing box respectively by a fastening member.

The battery housing part may be disposed on a side of the helmet housing box, the electrical equipment housing part may be disposed on the bottom of the helmet housing box, and a cushion member for the helmet may be provided on a surface on a side of the helmet housing part of the second inner lid.

Described herein is a straddle type vehicle comprising:
a seat;
a helmet housing box disposed below the seat and having an opening at a top surface thereof for permitting insertion and removal of a helmet;
an engine disposed in front of and below the helmet housing box;
a fuel spray device disposed above the engine; and
a battery housing part disposed in front of the helmet housing box and in a position above the fuel spray device.

The battery housing part may define a bottom hole passing through a bottom surface thereof. A support for supporting the battery may be detachably attached to at least partially cover the bottom hole.

The support may be configured such that only a part for supporting a battery partially protrudes above the bottom of the battery housing part.

The fuel spray device may comprise a carburetor. The fuel spray device may comprise a fuel injection system. The support may be configured in the shape of a board and a part for supporting a battery on a bottom surface thereof may be recessed relative to the fuel spray device, such as a carburetor. The support may be configured such that an upper surface thereof is generally flush with the bottom of the battery housing part.

The support may be selected from a plurality of supports adapted to support a battery at different heights within the battery housing part.

A hinge for rotatably supporting the seat may be formed at an upper part of the battery housing part.

A lid serving as a part of an inner wall of the helmet housing box may be provided at a boundary between the battery housing part and the helmet housing box.

The vehicle may further comprise electrical equipment disposed around the helmet housing box and connected to a battery disposed within the battery housing part by a wire. A first coupler may be connected to the end of wiring extended from the electrical equipment. A coupler retainer may be provided for fixing the first coupler. The battery housing part may be connected to the helmet housing box. The electrical equipment may be housed in an electrical equipment housing part connected to the helmet housing box. The first coupler fixed to the coupler retainer may be connected to a second coupler connected to the end of wiring extended from an external member.

The electrical equipment may comprise a starter relay. The external member may comprise a starter motor coupled to an engine of the straddle type vehicle.

A clasp for hooking a rear part of a case of the first coupler may be formed on the coupler retainer.

A latch member for latching a middle part of a case of the first coupler by surrounding the middle part may be provided on the coupler retainer. A protruding portion may be formed on the case of the first coupler retainer. A groove for guiding the first coupler by fitting the protruding portion formed on the first coupler may be formed on the latch member.

A first inner lid may be provided between the helmet housing box and the battery housing part, and a second inner lid may be provided between the helmet housing box and the electrical equipment housing part.

The first inner lid and the second inner lid may be fixed on the helmet housing box respectively by a fastening member.

The battery housing part may be disposed on a side of the helmet housing box. The electrical equipment housing part may be disposed on the bottom of the helmet housing box. A cushion member adapted to be engaged by a helmet received within the helmet housing box may be provided on a surface on a side of the helmet housing box of the second inner lid.

The support may comprise a metal member. The support may alternatively, or additionally, comprise a plastic material, composite material or the like.

In a straddle type vehicle according to the present invention, the battery housing part is disposed in front of the helmet housing box in the vehicle direction and in a position above the engine and the fuel spray device. Accordingly, the battery having a relatively large weight and the engine also having a large weight are concentrated in the vehicle fore-and-aft direction. Because of this, it can be avoided that heavy loads are distributed in the vehicle fore-and-aft direction. Consequently, driving characteristics and operability of the vehicle can be improved. In addition, a space between the fuel spray device and the seat can be utilized as a battery housing space. Therefore, a space which is conventionally a battery housing space can be effectively utilized as a space for other parts.

The vehicle includes the lid serving as a part of the inner wall of the helmet housing box at the boundary between the battery housing part and the helmet housing box. Thus, a battery can be checked and/or replaced easily from an inside of the helmet housing box by opening the seat and removing the lid. This improves facility in battery maintenance.

Further, the electrical equipment housed in the electrical equipment housing part connected to the helmet housing box and the external member disposed outside the helmet housing box and connected to the electrical equipment by a wire are provided. In addition, the wire between the electrical equipment and the external member is connected by connecting the first coupler connected to the end of wiring extended from the electrical equipment and the second coupler connected to the end of wiring extended from the external member.

As the couplers are interposed in a middle of the wiring connecting the electrical equipment and the external member, it becomes easy to assemble the electrical equipment and the external member. In other words, it is possible to connect the electrical equipment and the external member by the wire even after the helmet housing box is assembled with the vehicle body. Accordingly, assembly performance thereof is improved. In addition, as the first coupler connected to the end of the wiring extended from the electrical equipment is fixed on the coupler retainer formed integrally with the electrical equipment container. Accordingly, it is possible to firmly fix the first coupler. Therefore, it can be avoided that the coupler comes off due to vibrations or the like while a vehicle is running.

### BRIEF DESCRIPTION OF THE DRAWINGS

These and other aspects of the present invention will now be described, by way of example only, with reference to the accompanying drawings, in which:
FIG. 1 is an external side view schematically showing a construction of a straddle type vehicle 100 according to a first embodiment;
FIG. 2 is a side view illustrating a construction around a battery housing part 10 according to the first embodiment;
FIG. 3 is a top view of essential parts around the battery housing part on a larger scale;
FIG. 4 is an external view of the battery housing part as seen in a direction of an arrow "IV" in FIG. 2;
FIG. 5 is an enlarged view of essential parts showing a vicinity of the battery housing part as seen from above;
FIG. 6 is an enlarged view of essential parts showing the vicinity of the battery housing part as seen from a side;
FIG. 7 is an exploded perspective view of the battery housing part and a helmet housing box;
FIG. 8 (a) is a schematic side view in a case that a fuel spray device is a carburetor;
FIG. 8(b) is a schematic side view in a case that the fuel spray device is a fuel injector;
FIG. 9 is an external side view schematically showing a construction of a straddle type vehicle according to a second embodiment;
FIG. 10 is a schematic side view illustrating a construction under a seat of the vehicle;
FIG. 11(a) illustrates an upper surface of a housing box of the vehicle of the second embodiment;
FIG. 11 (b) illustrates a side thereof of a housing box of the vehicle of the second embodiment;
FIG. 12 is a drawing illustrating a construction of an inside of electrical equipment container;
FIG. 13 is an external perspective view of electrical equipment and wiring;
FIG. 14(a) is a top view of a coupler retainer;
FIG. 14 (b) is an external perspective view of the coupler retainer;
FIGs. 15(a) to 15(c) are drawings illustrating a procedure for fixing a first coupler on a coupler retainer;
FIGs. 16(a) to 16(c) are drawings illustrating a procedure for fixing the first coupler on the coupler retainer;
FIG. 17(a) is an enlarged view of essential parts of an electrical equipment housing part at a time when an inner lid is removed;
FIG. 17(b) is an enlarged view of essential parts of the electrical equipment housing part at a time when the inner lid is attached;
FIG. 18 is a drawing illustrating an example of modification of this embodiment;
FIG. 19 is an enlarged view of essential parts around a battery housing part at a time when an inner lid is attached; and
FIG. 20 is an external view of the battery housing part as seen from a direction of a helmet housing box.

### DETAILED DESCRIPTION OF THE DRAWINGS

A first embodiment according to the present invention will be described hereinafter with reference to accompanying drawings. In the accompanying drawings, members and parts effecting the same operation are referred to with the same reference numerals and symbols. The present invention is not limited to the embodiment below.

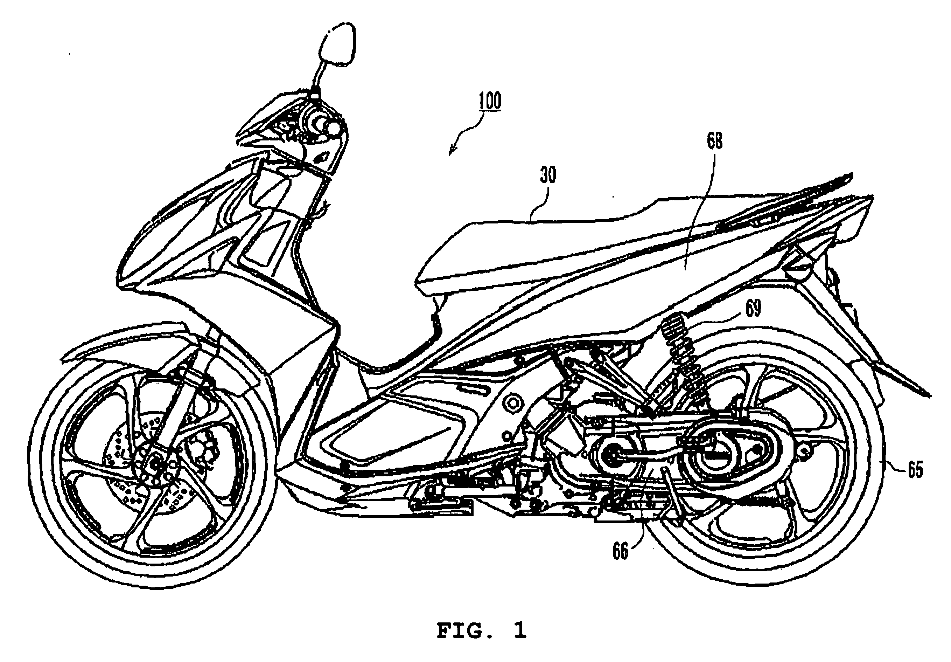

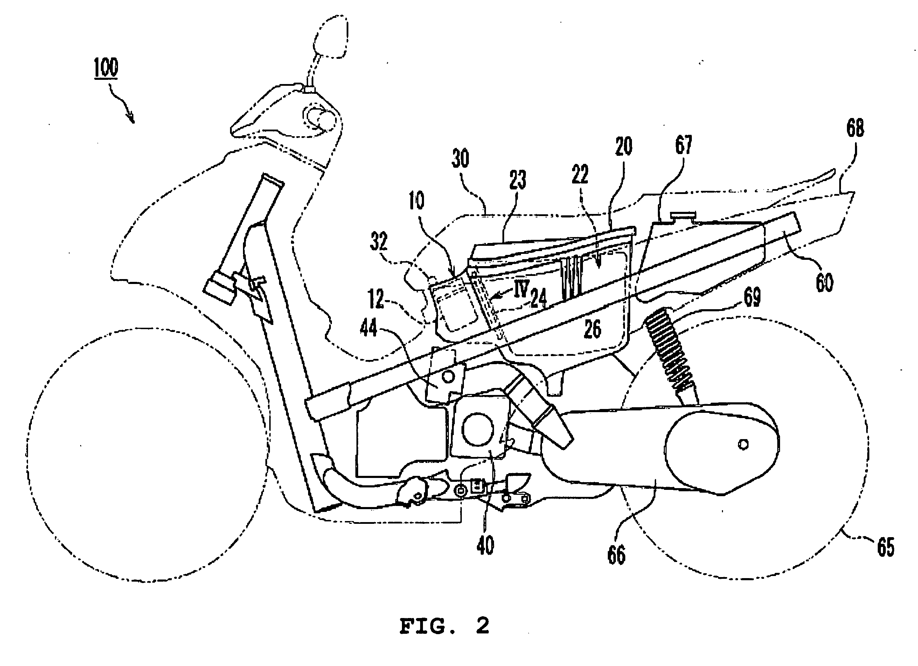

A straddle type vehicle 100 in the embodiment according to the present invention (also simply referred to as a "vehicle") will be described with reference to FIGs. 1 and 2. FIG. 1 is an external side view schematically showing a construction of the straddle type vehicle 100 of this embodiment. FIG. 2 is a side view illustrating a construction around a battery housing part 10 according to this embodiment.

The straddle type vehicle 100 according to the embodiment is a motorcycle of a so-called underbone frame type. The vehicle 100 is a vehicle having a helmet and a battery disposed under a seat, and is constructed with a seat 30 on which a rider is to be seated, a helmet housing box 20 disposed under the seat, and a battery housing part 10 disposed in front of the helmet housing box 20 in the vehicle fore-and-aft direction.

The seat 30 of this embodiment is disposed in a vicinity of a center of the vehicle in a manner such that a direction of the length thereof is along the vehicle fore-and-aft direction. A rear part of the seat 30 is formed to extend to a rear end of the vehicle 100. A pair of body covers 68 is provided obliquely below right and left sides of the seat 30. A space having an opening covered by the seat 30 is provided inside the body covers 68. A front end of the seat 30 of this embodiment is mounted on the vehicle body so as to be rotatable via a hinge 32. The space having an opening formed under the seat can be exposed by opening the seat 30 upward in this construction.

The helmet housing box 20 is provided in the space having an opening under the seat. The helmet housing box 20 of this embodiment is disposed in the front of the space having an opening under the seat, and positioned forwardly below a fuel tank 67 provided adjacently in the rear. The helmet housing box 20 is a container for housing a helmet (not shown), and can house all sorts of articles instead of a helmet. An upper region of the helmet housing box 20 defines an opening 22 for inserting and removing the helmet and so forth. The opening 22 is selectively closed by an inner lid 23.

The battery housing part 10 for housing a battery 12 is disposed in front of the helmet housing box 20 in the vehicle fore-and-aft direction. The battery housing part 10 of this embodiment is a resin member formed integrally with the helmet housing box 20. A front part of the battery housing part 10 is disposed to extend to a vicinity of the front end of the seat 30. The battery housing part 10 and the helmet housing box 20 may be produced as parts separated from each other. A lid 24 serving as a part of an inner wall 26 of the helmet housing box 20 is disposed at a boundary between the battery housing part 10 and the helmet housing box 20. The lid 24 separates a space for the battery housing part from a space for the helmet housing box.

The arrangement of the battery housing part 10 will now be described in further detail. An engine 40 and a fuel spray device 44 for supplying fuel to the engine 40 are disposed below the seat 30.

The engine 40 of this embodiment is disposed below a boundary between the helmet housing box 20 and the battery housing part 10. In other words, the engine 40 is disposed in front of the helmet housing box 20 in the vehicle fore-and-aft direction and in a position below the helmet housing box 20. Driving force of the engine 40 is transmitted to a rear wheel 65 via a drive transmission system in a transmission casing 66, and drives the rear wheel 65. The engine 40 of this embodiment is a swing type engine. That is, a unit in which the engine 40 and the transmission casing 66 are integrated (a drive unit) is coupled to a vehicle body frame 60 swingably in a vertical direction via a pivot shaft in a vicinity of the engine 40. A rear end of the transmission casing 66 is connected to a rear part of the vehicle body frame 60 via a rear cushion unit 69. In such a construction, impacts that can occur, for example, in the case of traveling on a rough road can be absorbed by swing movements of the drive unit, and thereby oscillations of the vehicle can be reduced.

The fuel spray device 44 is a member for supplying fuel to the engine 40, which is a carburetor, for example. The fuel spray device 44 of this embodiment is disposed below the front end of the seat 30 and obliquely forwardly above the engine 40. The fuel spray device 44 constructs a part of the drive unit described above, and swings in the vertical direction following swing movements of the drive unit.

The battery housing part 10 is disposed in a space between the fuel spray device 44, which swings in the vertical direction, and the seat 30. That is, in a side view, the battery 12 in the battery housing part 10 is positioned above the engine 40 and the fuel spray device 44.

The space between the fuel spray device 44 and the seat 30 is conventionally an unused space in which parts cannot be disposed since the fuel spray device 44 swings in the vertical direction. This is because if a part was disposed in the space, the part would have to be disposed in an upper part of the space to prevent it from swinging in the vertical direction, which would result in a large seat height and make it difficult for the rider to put his/her feet on the ground.

In this embodiment, the unused space above the fuel spray device 44 can be utilized as a battery housing space by means of arranging a construction of the vehicle. Therefore, a space which is conventionally a battery housing space can be effectively utilized as a space for other parts.

Also in this embodiment, the battery housing part 10 is positioned in front of the helmet housing box 20 and above the engine 40 and the fuel spray device 44. Therefore, the battery 12 having a relatively large weight and the engine 40 also having a large weight are concentrated in a generally common region in the vehicle fore-and-aft direction. Thus, it is attempted that heavy loads are concentrated generally in a middle part in the vehicle fore-and-aft direction. As a result, driving characteristics and operability of the vehicle can be improved. In scooter type vehicles, in particular, a load on the rear wheel tends to be large, and, therefore, a large advantage can be obtained by disposing a heavy battery in the vicinity of the center of the vehicle and concentrating a mass.

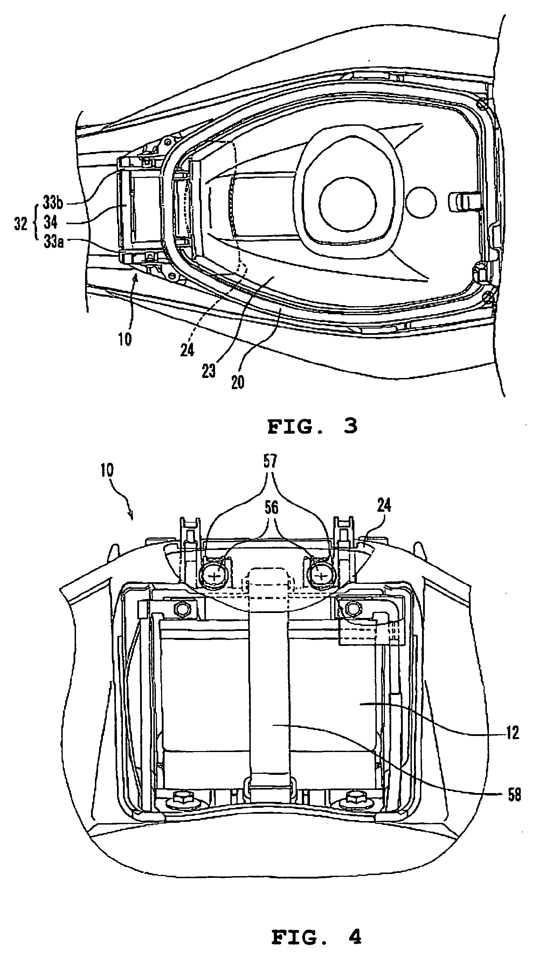

A construction of the battery housing part 10 according to this embodiment, in particular, a construction of the lid 24 will be described hereinafter with reference to FIGs. 3 and 4. FIG. 3 is a top view of essential parts around the battery housing part on a larger scale. FIG. 4 is an external view of the battery housing part as seen in a direction of an arrow "IV" in FIG. 2. In FIG. 4, a part of the lid 24 is cut away so that an inside of the battery housing part can be seen.

As shown in FIG. 3, the lid 24 of this embodiment is disposed at the boundary between the helmet housing box 20 and the battery housing part 10, and separates the helmet housing box 20 from the battery housing part 10. The lid 24 of this embodiment is bolted to the helmet housing box 20 removably with use of a tool. That is, as shown in FIG. 4, the lid 24 is fixed to mounting parts 57 provided in upper parts of the inner wall of the helmet housing box via two screws 56. Therefore, the lid 24 can be removed by loosening the two screws 56 with use of a tool (such as a screwdriver). The battery 12 housed in the battery housing part 10 can be exposed to a large extent in a state that the lid 24 is removed as described above.

With the above construction, the battery 12 can be easily checked and/or replaced from the inside of the helmet housing box 20 by opening the seat 30 upward and then removing the lid 24 with use of a tool. This improves ease in maintenance of the battery 12.

In this embodiment, a vertically extending band-shaped belt 58 is mounted at the boundary between the helmet housing box 20 and the battery housing part 10 in addition to the lid 24. That is, the maintenance of the battery 12 and so forth described above can be made by removing the lid 24 and further removing the belt 58 thereafter.

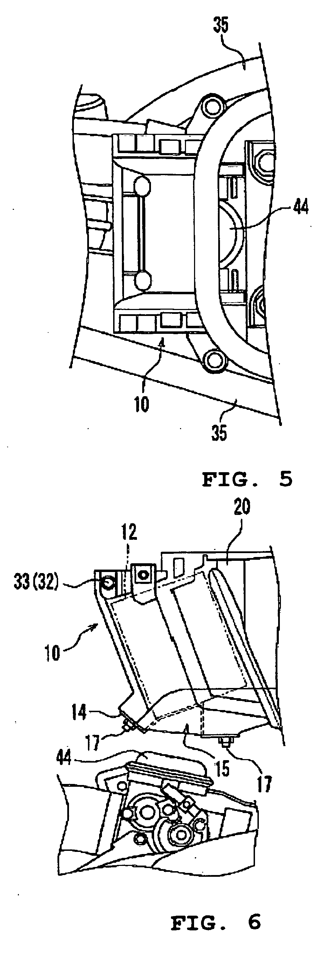

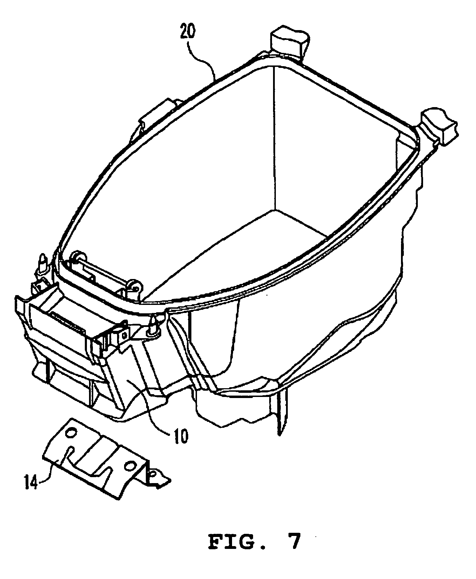

The construction of the battery housing part 10 according to this embodiment will be described in further detail with reference to FIGs. 5 through 8. FIG. 5 is an enlarged view of essential parts showing a vicinity of the battery housing part as seen from above. FIG. 6 is an enlarged view of essential parts showing the vicinity of the battery housing part as seen from a side. FIG. 7 is an exploded perspective view of the battery housing part 10 and the helmet housing box 20. In FIG. 5, members are partially cut away for understanding of a state of a lower part of the battery housing part 10.

If the battery housing part 10 is seen from above as shown in FIG. 5, the battery housing part 10 is disposed in a space in front of the helmet housing box 20 and between right and left seat rail frames 35. The fuel spray device 44 is disposed below the battery housing part 10. If the battery housing part 10 is seen from a side as shown in FIG. 6, the battery housing part 10 is disposed to incline forward in a manner such that an upper part thereof is positioned in front of a lower part. Therefore, the battery 12 in the battery housing part 10 is supported in the forwardly inclining position, and exposed obliquely upward in the case that the lid 24 is removed. By retaining the battery 12 in the forwardly inclining position, the battery housing part 10 is made compact in the vertical direction. As a result, the height of the seat is lowered and operational stability can be improved.

As shown in FIG. 6, the hinge 32 for rotatably supporting the seat 30 is provided in the upper part of the battery housing part 10. As shown in FIG. 3, the hinge 32 is constructed with a supporting shaft 34 and a pair of mounting pieces 33a and 33b in which the supporting shaft 34 is fitted. The seat 30 is fixed to the hinge 32 via bolts and nuts. The battery housing part 10 can bear a load acting on the hinge 32 when the seat is opened by providing the hinge 32 formed integrally with the battery housing part 10 in the upper part of the battery housing part 10 in the above manner. Thereby, sufficient mounting strength for the seat 30 can be obtained.

It is required that a large rib be provided below the seat for bearing weight of a rider in the case that the hinge is disposed in a front part of the seat. On the other hand, in this embodiment, the hinge is disposed in the upper part of the battery housing part, and thus the battery housing part can bear the weight of a rider. Therefore, it is not required to provide a rib separately, and a number of vehicle parts can be reduced. It is required only that the battery housing part be in a shape having strength sufficient to bear the weight of a rider. A box type battery housing part can preferably be used as a typical example. A compact arrangement can be achieved by providing the hinge 32 in the upper part of the battery housing part 10, comparing with a case that the hinge is disposed in a front part of the battery housing part 10.

Further, as shown in FIGs. 6 and 7, a support 14 is disposed at a bottom of the battery housing part 10. Specifically, a bottom hole 15 is formed, vertically passing through a lower surface of the battery housing part 10 made of resin material. In addition, the support 14 in the shape of a board serving as the bottom surface of the battery housing part 10 is detachably attached to the bottom hole 15. The support 14 is fixed to an outer wall of the battery housing part 10 via bolts 17, and blocks the bottom hole 15 from a lower side thereof. With such a construction, the battery 12 housed in the battery housing part 10 is supported by an upper surface of the support 14.

A material for the support 14 is not limited to a particular material as long as it has strength sufficient for supporting the battery 12. However, the support 14 made of a metal material (such as sheet metal part) may be preferably used. The battery housing part 10 bears the load of the seat 30 when the seat is opened as described above. The support 14 made of metal having strength higher than resin can be utilized as a strength member.

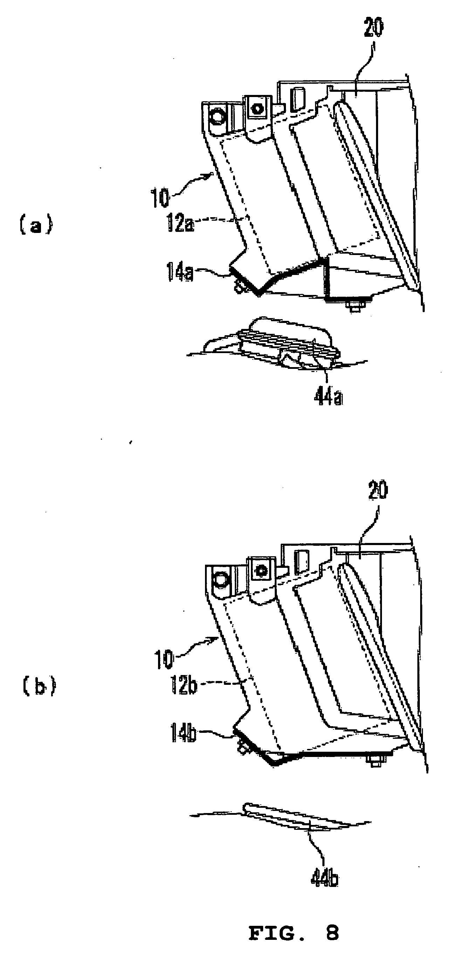

Two types of support 14 are constructed such that an elevation of the battery 12 is adjustable. In this embodiment, the support 14 can be replaced by removing the bolts 17. A housing volume of the battery housing part 10 can be properly adjusted by replacing the support 14 with a different shape. For example, a support 14a in FIG. 8 (a) has such a shape that only a part of an upper surface thereof on which the battery 12 is set for a support partially protrudes above a bottom surface of the battery housing part 10. In addition, a part corresponding to a carburetor 44a of a lower surface of the support 14a (a surface opposite to the carburetor 44a) is partially recessed. Meanwhile, a support 14b in FIG. 8 (b) has such a shape that an upper surface thereof is generally flush with the bottom surface of the battery housing part 10. In other words, while the support 14a is constructed to lift up a bottom surface of the battery 12 from the bottom of the battery housing part 10, the support 14b is constructed such that the bottom of the battery 12 is disposed close to the bottom of the battery housing part 10 to increase the housing volume of the battery housing part 10. Therefore, a housing volume of the battery housing part 10 can be increased by replacing the support 14a with the support 14b. This enables an installation of a large battery. Since the support 14 is replaceable as described above, the preferable support 14 may be appropriately selected according to a size of an installed battery. Accordingly, it is not required to change vehicle arrangements for different battery sizes for vehicles of the same exterior but of different specifications.

In this embodiment, the housing volume of the battery housing part 10 is variable by replacement of the support 14 with the upper surface having a different height. However, it is required only that the support 14 can properly adjust an elevation of the bottom of the battery housing part 10. For example, the support 14 itself may be provided with a function for adjusting the height of the bottom of the battery housing part 10. In this case, trouble with replacement between the supports 14 can be saved.

The battery housing part 10 of this embodiment is disposed above the fuel spray device 44 as described above. Therefore, the support 14 in the preferable shape may be appropriately selected according to a size and so forth of the fuel spray device 44 to be installed. For example, in the case that a carburetor is used as the fuel spray device 44, a volume of the whole system becomes relatively large compared to a fuel injector (FI), while a battery capacity (battery size) becomes relatively small compared to an FI. Therefore, the support 14a having the lower surface partially recessed in an area corresponding to the carburetor 44a as shown in FIG. 8(a) is used to house a relatively small battery 12a in the case that the carburetor 44a is installed. Thereby, a large space for mounting the carburetor 44a can be provided by enlarging a space formed below the battery housing part 10.

On the other hand, the support 14b having the upper surface generally flush with the bottom of the battery housing part 10 is used as shown in FIG. 8(b) in the case that a fuel injector (FI) 44b is installed as the fuel spray device 44. Thereby, the housing volume of the battery housing part 10 can be increased, and a large battery 12b can be housed.

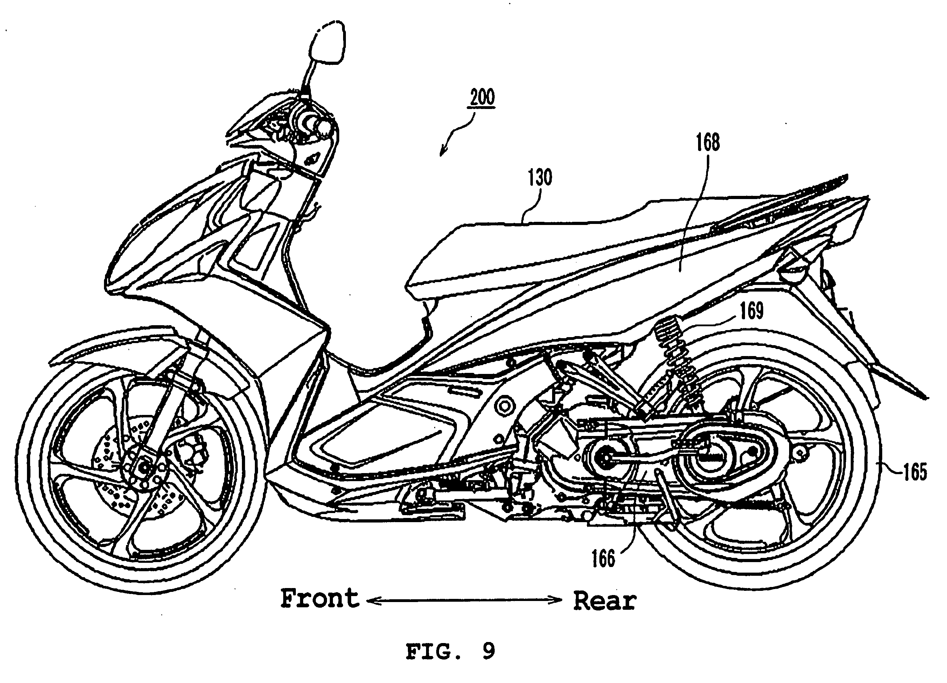

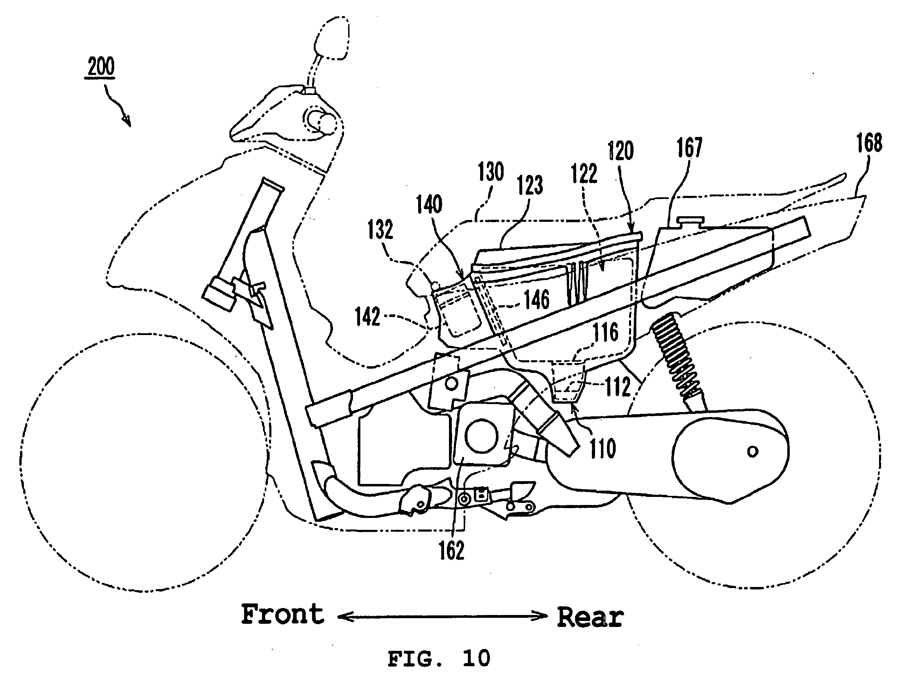

A straddle type vehicle 200 in a second embodiment according to the present invention (also simply referred to as a "vehicle") will be described with reference to FIGs. 9 and 10. FIG. 9 is an external side view schematically illustrating a construction of the straddle type vehicle 200 according to the embodiment. FIG. 10 is a schematic side view illustrating a construction under a seat of the vehicle 200.

The straddle type vehicle 200 according to this embodiment is a so-called underbone type motorcycle. The vehicle 200 is a vehicle capable of housing a helmet under a seat, and is constructed with a seat 130 on which a rider is to be seated, a helmet housing box 120 disposed under the seat, a battery housing part 140 disposed in front of the helmet housing box 120 in the vehicle direction, and an electrical equipment container 110 disposed below the helmet housing box 120.

The seat 130 of this embodiment is disposed in a vicinity of a center of the vehicle in a manner such that a direction of the length thereof is along the vehicle fore-and-aft direction. A rear part of the seat 130 is formed to extend to a rear end of the vehicle 200. A pair of body covers 168 is provided obliquely below right and left sides of the seat 130. A space having an opening covered by the seat 130 is provided inside the body covers 168. A front end of the seat 130 of this embodiment is mounted on the vehicle body so as to be rotatable via a hinge 132. The space having an opening formed under the seat can be exposed by opening the seat 130 upward.

The helmet housing box 120 is provided in the space having an opening under the seat. The helmet housing box 120 of this embodiment is disposed in the front of the space having an opening under the seat, and positioned forwardly below a fuel tank 167 provided adjacently in the rear. The helmet housing box 120 is a container for housing a helmet (not shown), and can house all sorts of articles instead of a helmet. The opening 22 for inserting and removing a helmet and so forth is provided above the helmet housing box 120. The opening 22 is selectively covered with a lid 123.

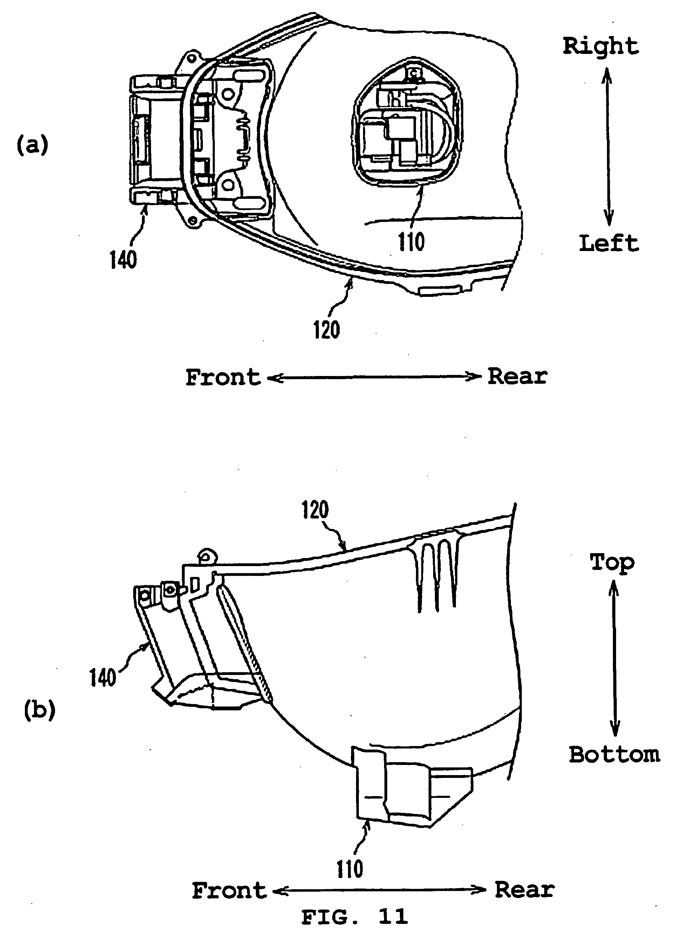

A construction around the helmet housing box 120 will be described hereinafter also with reference to FIG. 11. FIG. 11 is enlarged views of essential parts around the helmet housing box 120. FIG. 11 (a) shows an upper surface thereof, while FIG. 11(b) shows a side thereof.

The battery housing part 140 for housing a battery 142 is disposed on the side of the helmet housing box 120. The battery housing part 140 of this embodiment is a resin member formed integrally with the helmet housing box 120, and is provided in front of the helmet housing box 120. The battery housing part 140 and the helmet housing box 120 may be produced as parts separated from each other. An inner lid 146 (a first inner lid 146) is disposed at a boundary between the battery housing part 140 and the helmet housing box 120. The inner lid 146 separates a space for the battery housing part from a space for the helmet housing box.

The electrical equipment container 110 is disposed on a bottom surface of the helmet housing box 120. The electrical equipment container 110 of the embodiment is a member made of resin formed integrally with the helmet housing box 120, and provided generally in a middle part of the bottom surface of the helmet housing box 120. An upper part of the electrical equipment container 110 is an open end, and the electrical equipment container 110 is connected to the inside of the helmet housing box 120 via the open end. In addition, an inner lid 116 (a second inner lid 116) is disposed at a boundary between the electrical equipment container 110 and the helmet housing box 120. A housing space of the electrical equipment container 110 is separated from a housing space of the helmet housing box 120 by the inner lid 116.

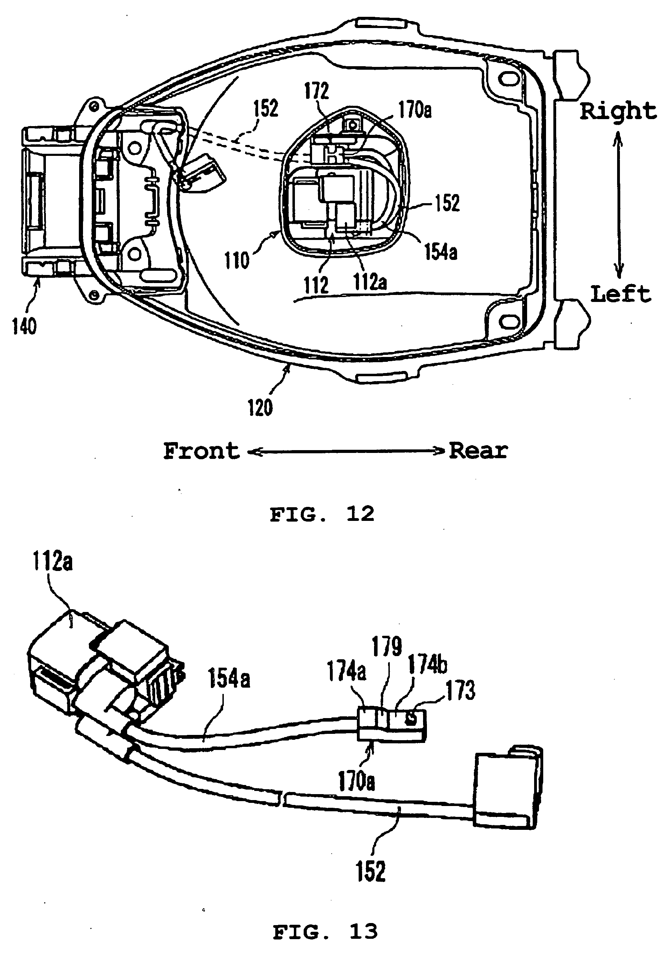

An internal construction of the electrical equipment container 110 will be described hereinafter with reference to FIG. 12. Electrical equipment 112 is housed in the electrical equipment container 110. The electrical equipment 112 is, for example, a starter relay and a fuse. The electrical equipment 112 is electrical equipment mounted on a typical straddle type vehicle and is not particularly limited. In the embodiment, a fuse integrated with a starter relay is mounted. A starter relay 112a is interposed between a starter motor (not shown) and the battery 142, and has a function as a substantial switch operating the starter motor by receiving an input from a starter switch on a handlebar. For this purpose, the starter relay 112a is electrically connected to the battery 142 via wiring 152 and electrically connected to the starter motor via wiring 154. The starter motor of the embodiment is provided on an engine 162 (see FIG. 10) in the same manner as a starter motor mounted on a typical straddle type vehicle, and is a typical example of an "external member" disposed outside the electrical equipment container 110 (the helmet housing box 120).

A coupler is interposed in a middle of the wiring 154 connecting the starter motor (external member). Specifically, a first coupler 170a connected to the end of wiring 154a extended from the starter relay 112a and a second coupler (not shown) connected to the end of wiring (not shown) extended from the starter motor (external member) are provided. The starter relay 112a and the starter motor (external member) are electrically connected by fitting the first coupler 170a and the second coupler. The first coupler 170a is fixed on a coupler retainer 172 formed integrally with the bottom surface of the electrical equipment container 110. In this embodiment, the coupler retainer 172 is provided on a right side of the bottom surface of the electrical equipment container 110, and coupler retainer 172 fixes the first coupler 170a not to move.

According to the straddle type vehicle 200 of the present invention, wiring between the starter relay 112a (electrical equipment) in the electrical equipment container 110 connected to the helmet housing box 120 and the starter motor (external member) disposed outside the helmet housing box 120 is arranged by connecting the first coupler 170a connected to the end of the wiring 154a extended from the starter relay 112a (electrical equipment) and the second coupler connected to the end of the wiring extended from the starter motor (external member). Accordingly, the electrical equipment 112 (starter relay 112a) and the external member (starter motor) can be connected after the helmet housing box 120 is assembled with the vehicle body. Thereby, assembly performance thereof is improved.

In addition, the first coupler 170a connected to the end of the wiring 154a extended from the starter relay 112a (electrical equipment) is fixed on the coupler retainer 172 formed integrally with the electrical equipment container 110. Consequently, it is possible to firmly fix the first coupler 170a. Therefore, it can be avoided that the coupler comes off due to vibrations or the like while the vehicle is running.

In the embodiment, the battery housing part 140 is disposed on the side of the helmet housing box 120, and the electrical equipment container 110 is disposed on the bottom surface of the helmet container 120. Consequently, it is possible to dispose the battery 142 and the electrical equipment 112 (starter relay 112a) relatively in a vicinity of each other. Because of this, it can be prevented that voltage between the battery 142 and the electrical equipment 112 is reduced. In addition, the electrical equipment container 110 is disposed on the bottom surface of the helmet housing box 120. Therefore, distance between the starter relay 112a (electrical equipment) and the engine 162 (starter motor in particular) is also reduced (see FIG. 9). Thereby, it is possible to simplify wiring 54 connecting the starter relay 112a and the engine 162.

A drawing opening for drawing in the second coupler from the starter motor (external member) is opened in a side surface on the front side of the electrical equipment container 110. Consequently, it is possible to draw in the second coupler in the electrical equipment container 110 via the drawing opening. As the drawing opening is provided in a vicinity of the coupler retainer 172, work for connecting wire between the first coupler 170a and the second coupler becomes easy.

Further, wiring 152 for the battery is drawn out of the electrical equipment container 110 (helmet housing box 120) from the drawing opening described above, and is connected to the battery 142 via an opening on the side of the battery housing part. As the wiring 152 for the battery is drown out of the helmet housing box 120, it is possible to make an interior of the helmet container free from wiring etc. Since high voltage is applied to the wiring 152 for the battery, it is preferable that a coupler is not interposed in the middle of the wire connected between the battery 142 and the electrical equipment 112.

An internal construction of the electrical equipment container 110 of this embodiment and in particular a coupler fixing construction of the coupler retainer 172 will be described hereinafter in detail with reference to FIG. 13 to FIG. 16. A construction of the first coupler 170a will be described first with reference to FIG. 13. FIG. 13 is a perspective view of an external appearance of the electrical equipment 112a provided with the first coupler 170a.

As illustrated in FIG. 13, the wiring 152 to be connected to the battery 142 and the wiring 154a on the side of the starter relay of the wiring 154 to be connected to the starter motor are extended from the starter relay 112a as a part of the electrical equipment 112. In addition, the first coupler 170a is attached on the end of the wiring 154a. The first coupler 170a of the embodiment is a so-called female coupler with an open end with which the top of a second coupler can be fitted.

The first coupler 170a comprises a casing generally in the shape of a cuboid, and is constructed with a case middle part 174 constructing a main body thereof and a protruding portion 173 formed on an upper surface of the case middle part 174. In addition, an inclined step 179 is formed on an upper surface of the case middle part 174 in addition to the protruding portion 173.

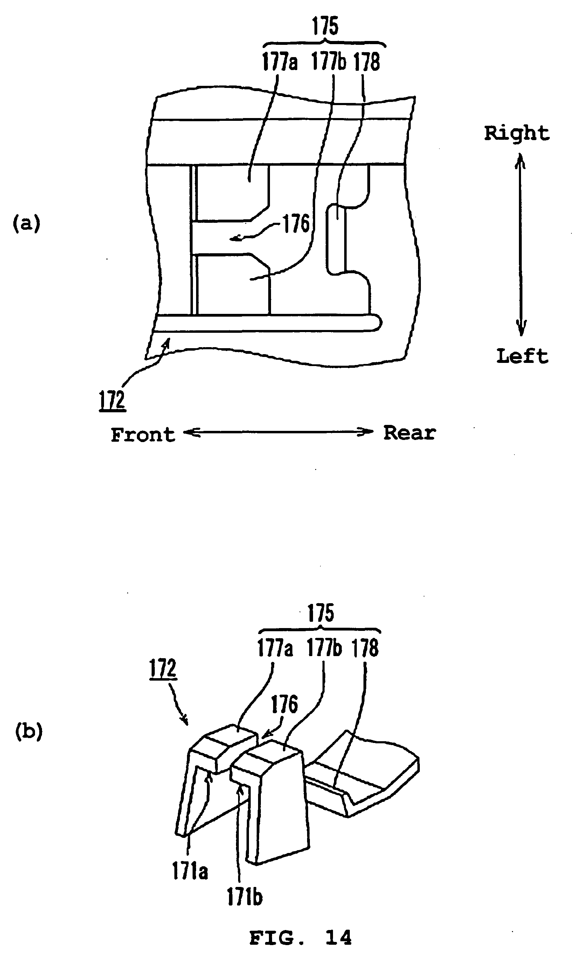

A construction of the coupler retainer 172 will be described next with reference to FIG. 14. FIG. 14 (a) is a top view of the coupler retainer 172, and FIG. 14 (b) is a perspective view of an external appearance of the coupler retainer 172. As shown in FIG. 14(a) and FIG. 14(b), the coupler retainer 172 is provided with a latch member 175 for latching the case middle part 174 of the first coupler 170a by surrounding the case middle part 174. The latch member 175 of this embodiment is constructed with a pair of projecting portions 177a and 177b and a clasp 178.

The projecting portions 177a and 177b are a pair of members projecting upward from an upper surface of the electrical equipment container 110. The projecting portions 177a and 177b of this embodiment are disposed apart from each other, so that the case middle part 174 can pass between the projecting portions 177a and 177b. In addition, upper parts of the projecting portions 177a and 177b bend internally (in directions in which they face each other), and a guide groove 176 having a narrow width is formed. The guide groove 176 has a groove width narrow enough for the projection 173 of the first coupler 170a to pass through the guide groove 176. Further, inclined steps 171a and 171b are formed on a lower surface of bending portions of the projecting portions 177a and 177b respectively.

The clasp 178 is provided on the upper surface of the electrical equipment container 110, and is disposed rearwardly of the projecting portions 177a and 177b. The clasp 178 of this embodiment is a projection in a linear shape made of a resin material, and is formed so that the length direction thereof is along the traverse direction of the vehicle.

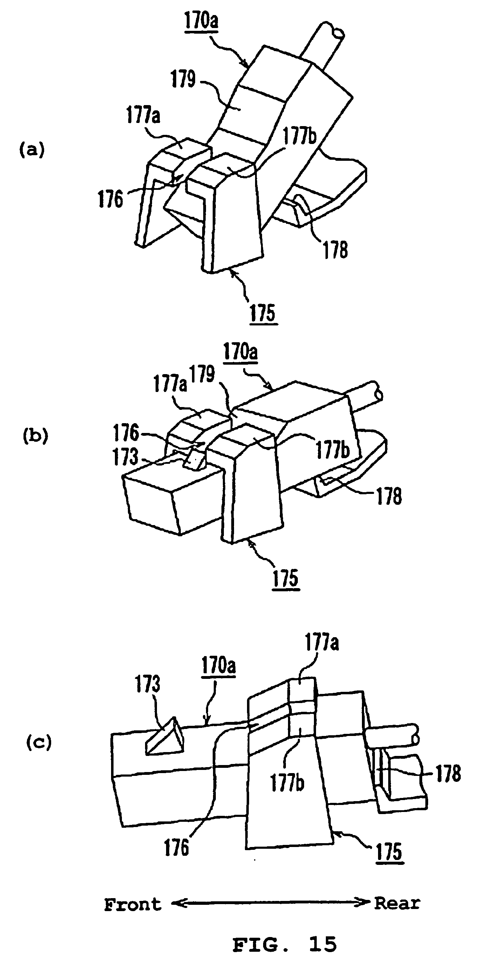

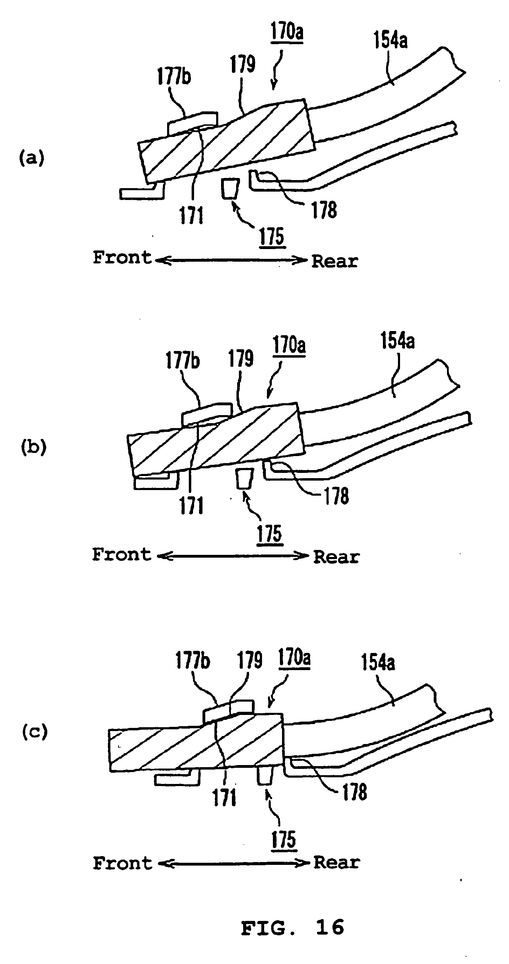

A procedure for fixing the first coupler 170a on the coupler retainer 172 will be described hereinafter with reference to FIGs. 15(a) to 15(c) and FIGs. 16(a) to 16(c). FIGs. 15(a) to 15(c) are external perspective views illustrating the procedure for fixing the first coupler 170a on the coupler retainer 172, and FIGs. 16(a) to 16(c) are schematic views thereof. Firstly, the protruding portion 173 of the first coupler 170a is fitted in the guide groove 176 as illustrated in FIG. 15(a) and FIG. 16(a).

Following this, as illustrated in FIG. 15(b) and FIG. 16(b), the case middle part 174 of the first coupler 170a is fitted in the lower side of the bending portion of a pair of the projecting portions 177a and 177b, and the case middle part 174 is slid frontward. As illustrated here, a position of the first coupler 170a in the traverse direction of the vehicle is fixed by passing the first coupler 170a between a pair of the projecting portions 177a and 177b.

Following this, as illustrated in FIG. 15(c) and FIG. 16(c), the case middle part 174 is slid further frontward, and the step 179 of the first coupler 170a and the steps 171a and 171b of the projecting portions are made to come in contact. As they come in contact in this manner, a forward movement of the first coupler 170a is restricted. In addition, the clasp 178 comes to a rear surface of the case middle part 174. The clasp 178 restricts a rearward movement of the first coupler 170a. In this manner, the position of the first coupler 170a in the vehicle fore-and-aft direction is fixed.

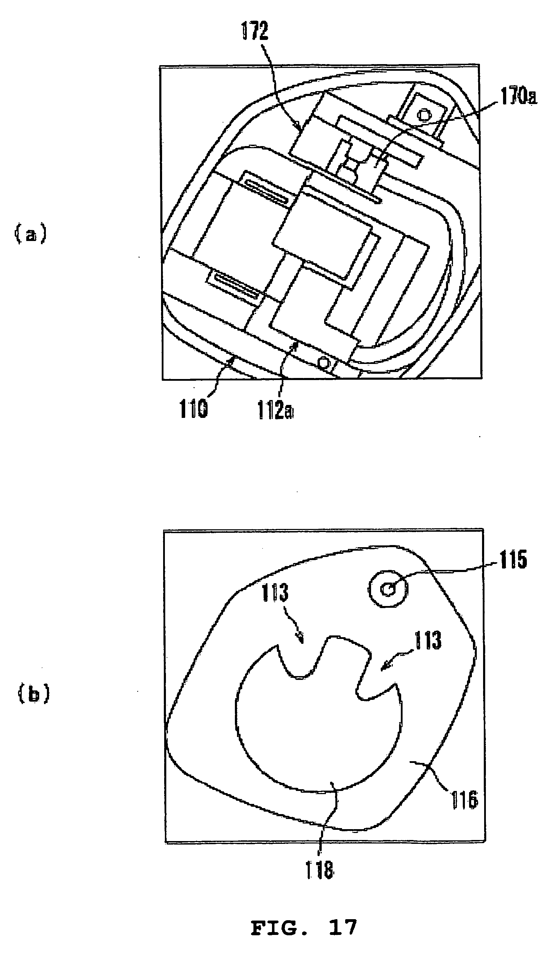

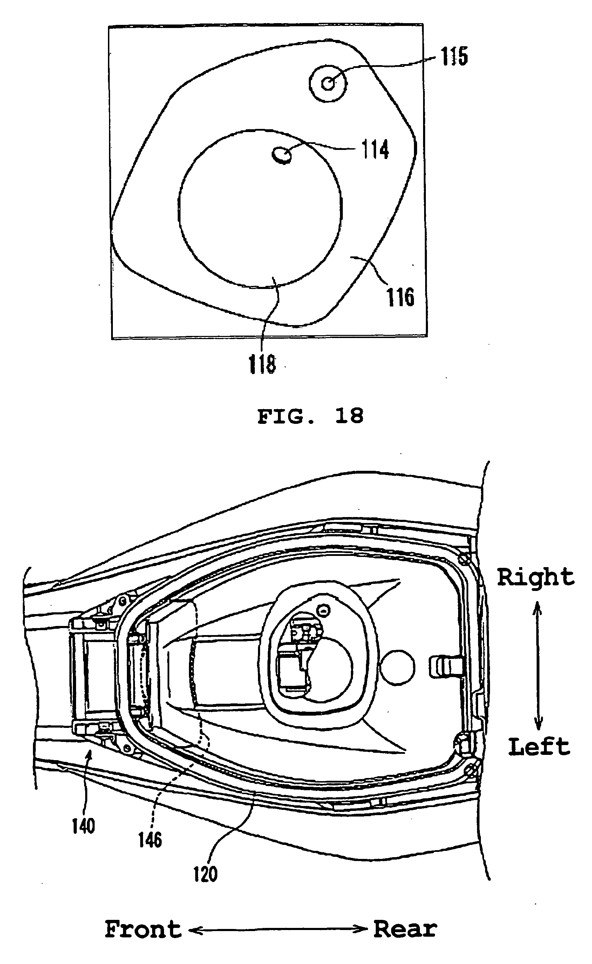

A construction of the battery housing part 140 and the electrical equipment container 110 will be described hereinafter with reference to FIGs. 17 and 18. As illustrated in FIG. 17, the inner lid 116 (second inner lid 116) is disposed at a boundary between the electrical equipment container 110 and the helmet housing box 120. The inner lid 116 of this embodiment is detachably fixed by a screw on the helmet housing box 120 via a screw 115 as a fastening member. Because of this, it is possible to hide the electrical equipment with the inner lid 116 at a usual time. Thereby, it is possible to improve the appearance of an interior of the helmet housing box. In addition, a cushion member 118 for a helmet is provided on a surface on a side of the helmet housing box of the second inner lid 116. The cushion member 118 of this embodiment is made of a sponge generally in the shape of a disk, and is disposed generally in a middle part of the inner lid 116. In addition, a cutout 113 is formed in a part of the cushion member 118. It is possible to hold the inner lid 116 via the cutout 113 in this construction. As illustrated here, as a function as a knob of the inner lid 116 is added to the cushion member 118, it is not necessary to provide a separate knob on the inner lid 116. Accordingly, it is possible to make the interior of the helmet housing box neat. The inner lid may not necessarily be held by the cutout described above but may be held by some other means. For example, as illustrated in FIG. 18, a protruding portion 114 may be provided on the cushion member 118, so that the protruding portion 114 can be held in this construction.

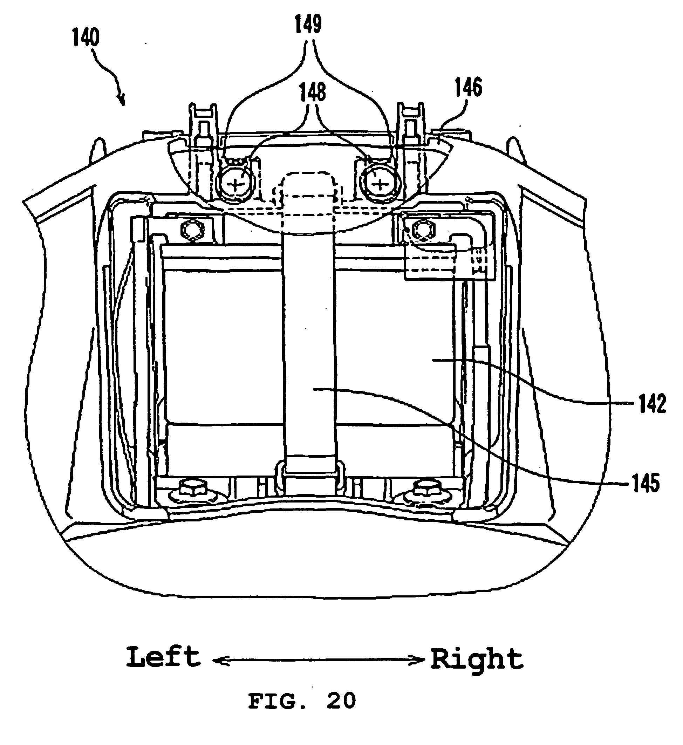

As illustrated in FIG. 19, the inner lid 146 (first inner lid) is disposed at the boundary between the helmet housing box 120 and the battery housing part 140 to separate the helmet housing box 120 from the battery housing part 140. The inner lid 146 of this embodiment is removably fixed on the helmet housing box 120 by screws with use of a tool. Specifically, the inner lid 146, as illustrated in FIG. 20, is fastened and fixed on a mount section 149 provided on an upper side of the inner wall of the helmet housing part via two screws 148 (fastening members). Accordingly, it is possible to remove the inner lid 146 by releasing the connection of the two screws 148 by using a tool (a screwdriver for example). The battery 142 housed in the battery housing part 140 can be exposed to a large extent in a state that the inner lid 146 is removed as described above.

With the above construction, the battery 142 can be easily checked and/or replaced from the inside of the helmet housing box 120 by opening the seat 130 upward and next removing the inner lid 146 with use of a tool. This improves facility in maintenance of the battery 142.

In this embodiment, a band-shaped belt 145 extending vertically is mounted at the boundary between the helmet housing box 120 and the battery housing part 140 in addition to the lid 123. That is, the maintenance of the battery 142 and so forth described above can be made by removing the inner lid 146 and further removing the belt 145 thereafter in this construction.

The "straddle type vehicle" in this specification is not limited to vehicles in which a rider is seated while straddling a seat, but also includes vehicles in which a rider is seated with both his/her legs placed next to each other (typically scooter type vehicles). The straddle type vehicle 100 shown in FIG. 1 and the straddle type vehicle 200 shown in FIG. 9 are underbone type motorcycles. However, the present invention is not limited to this case, but is applicable to a straddle type vehicle having a battery housing part under a seat. For example, the present invention is applicable to vehicles other than underbone type motorcycles such as four-wheeled buggies (ATV: All Terrain Vehicle) and snowmobiles.

In the foregoing, the present invention is described with preferable embodiments. However, the descriptions are not limitations, and various modifications are of course possible.

The present invention can provide a straddle type vehicle having a battery disposition by which heavy loads are concentrated and thereby operability of the vehicle is improved.

In addition, according to the present invention, it is possible to provide a straddle type vehicle in which it is easy to connect the wire between electrical equipment housed under a seat and an external member.

### Description of Reference Numerals and Symbols

10: battery housing part
12: battery
14: support
15: bottom hole
17: bolt
20: helmet housing box
22: opening
23: inner lid
24: lid
26: inner wall
30: seat
32: hinge
33: mounting piece
34: supporting shaft
40: engine
44: fuel spray device
44a: carburetor
44b: fuel injector
56: screw
57: mounting part
58: belt
60: vehicle body frame
65: rear wheel
66: transmission casing
67: fuel tank
68: body cover
69: rear cushion unit
100: straddle type vehicle

## Claims

1. A straddle type vehicle (100) comprising:
a seat (30);
a helmet housing box (20) disposed below the seat (30) and having an opening (22) at a top surface thereof for permitting insertion and removal of a helmet;
an engine (40) disposed in front of and below the helmet housing box (20);
a fuel spray device (44) for supplying fuel to the engine (40), being disposed obliquely forwardly above the engine (40), the fuel spray device (44) being located at least partially in front of the engine (40) when the vehicle (100) is viewed from the side; and
a battery housing part (10) disposed in front of the helmet housing box (20) and in a position above the fuel spray device (44); wherein
the engine (40) is integrated with a transmission casing (66) in a drive unit that is coupled to a vehicle body frame (60) swingably in a vertical direction via a pivot shaft in a vicinity of the engine (40); and
the fuel spray device (44) which constructs a part of the drive unit and is adapted to swing in the vertical direction following swing movements of the drive unit, is provided below a front end of the seat (30) and the battery housing part (10) is provided in a space between the fuel spray device (44) and the seat (30).

2. The straddle type vehicle (100) according to claim 1,
wherein the battery housing part (10) defines a bottom hole (15) passing through a bottom surface thereof, and
a support (14) for supporting a battery (12) is detachably attached to at least partially cover the bottom hole (15).

3. The straddle type vehicle (100) according to claim 2, wherein the support (14) is configured such that only a part for supporting the battery (12) partially protrudes above the bottom of the battery housing part (10).

4. The straddle type vehicle (100) according to claim 3,
wherein the fuel spray device (44) comprises a carburetor (44a), and
the support (14) is configured in the shape of a board and the part for supporting the battery (12) on a bottom surface thereof is recessed relative to the carburetor (44a).

5. The straddle type vehicle (100) according to claim 2,
wherein the fuel spray device (44) comprises a fuel injection system (44b), and
the support (14) is configured such that an upper surface thereof is generally flush with the bottom of the battery housing part (10).

6. The straddle type vehicle (100) according to any one of claims 2 to 5, wherein the support (14) is selected from a plurality of supports adapted to support the battery (12) at different heights within the battery housing part (10).

7. The straddle type vehicle (100) according to any preceding claim, wherein a hinge (32) for rotatably supporting the seat (30) is formed at an upper part of the battery housing part (10).

8. The straddle type vehicle (100) according to any preceding claim, wherein a lid (24) serving as a part of an inner wall of the helmet housing box (20) is provided at a boundary between the battery housing part (10) and the helmet housing box (20).

9. The straddle type vehicle (200) according to any preceding claim, further comprising:
an electrical equipment (112) disposed around the helmet housing box (120) and connected to a battery (142) disposed within the battery housing part (140) by a wire (152);
a first coupler (170a) connected to the end of a wiring (154a) extended from the electrical equipment (112); and
a coupler retainer (172) for fixing the first coupler (170a),
wherein the battery housing part (140) is connected to the helmet housing box (120),
the electrical equipment (112) is housed in an electrical equipment housing part (110) connected to the helmet housing box (120), and
the first coupler (170a) fixed to the coupler retainer (172) is connected to a second coupler connected to the end of a wiring extended from an external member.

10. The straddle type vehicle (200) according to claim 9,
wherein the electrical equipment (112) comprises a starter relay (112a), and
the external member comprises a starter motor coupled to the engine (162) of the straddle type vehicle (200).

11. The straddle type vehicle (200) according to claim 9 or 10, wherein a clasp (178) for hooking a rear part of a case (174) of the first coupler (170a) is formed on the coupler retainer (172).

12. The straddle type vehicle (200) according to claim 9, 10 or 11,
wherein a latch member (171) for latching a middle part (179) of a case (174) of the first coupler (170a) by surrounding the middle part (179) is provided on the coupler retainer (172),
a protruding portion (173) is formed on the case (174) of the first coupler (170a), and
a groove (176) for guiding the first coupler (170a) by fitting the protruding portion (173) formed on the first coupler (170a) is formed on the latch member (171).

13. The straddle type vehicle (200) according to any one of claims 9 to 12,
wherein a first inner lid (146) is provided between the helmet housing box (120) and the battery housing part (140), and
a second inner lid (116) is provided between the helmet housing box (120) and the electrical equipment housing part (110).

14. The straddle type vehicle (200) according to claim 13, wherein the first inner lid (146) and the second inner lid (116) are fixed on the helmet housing box (120) respectively by a fastening member.

15. The straddle type vehicle (200) according to claim 13 or 14,
wherein the battery housing part (140) is disposed on a side of the helmet housing box (120),
the electrical equipment housing part (110) is disposed on the bottom of the helmet housing box (120), and
a cushion member (118) adapted to be engaged by a helmet received within the helmet housing box (120) is provided on a surface of at least one of the first and second inner lids (146, 116).

## Patentansprüche

1. Reitsitz-Fahrzeug (100), das Folgendes umfasst:
einen Sitz (30),
einen Helmunterbringungskasten (20), der unterhalb des Sitzes (30) angeordnet ist und eine Öffnung (22) an einer oberen Fläche desselben hat, um ein Einlegen und Entnehmen eines Helms zu ermöglichen,
einen Motor (40), der vor und unter dem Helmunterbringungskasten (20) angeordnet ist,
eine Kraftstoff-Sprühvorrichtung (44) zum Zuführen von Kraftstoff zu dem Motor (40), die schräg vorne oberhalb des Motors (40) angeordnet ist, wobei die Kraftstoff-Sprühvorrichtung (44) wenigstens teilweise vor dem Motor (40) angeordnet ist, wenn das Fahrzeug (100) von der Seite betrachtet wird, und
einen Batterieunterbringungsteil (10), der vor dem Helmunterbringungskasten (20) und in einer Position oberhalb der Kraftstoff-Sprühvorrichtung (44) angeordnet ist, wobei
der Motor (40) mit einem Getriebegehäuse (66) in einer Antriebseinheit integriert ist, die über einen Drehzapfen in einer Nachbarschaft des Motors (40) in einer vertikalen Richtung schwenkbar an einen Fahrzeugaufbaurahmen (60) gekoppelt ist, und
die Kraftstoff-Sprühvorrichtung (44), die einen Teil der Antriebseinheit bildet und dafür eingerichtet ist, den Schwenkbewegungen der Antriebseinheit folgend in der vertikalen Richtung zu schwenken, unterhalb eines vorderen Endes des Sitzes (30) bereitgestellt wird und der Batterieunterbringungsteil (10) in einem Raum zwischen der Kraftstoff-Sprühvorrichtung (44) und dem Sitz (30) bereitgestellt wird.

2. Reitsitz-Fahrzeug (100) nach Anspruch 1,
wobei der Batterieunterbringungsteil (10) ein Grundloch (15) definiert, das durch eine untere Fläche desselben hindurchgeht, und
eine Stütze (14) zum Stützen einer Batterie (12) abnehmbar befestigt ist, um das Grundloch (15) wenigstens teilweise abzudecken.

3. Reitsitz-Fahrzeug (100) nach Anspruch 2, wobei die Stütze (14) derart konfiguriert ist, dass nur ein Teil zum Stützen der Batterie (12) teilweise oberhalb des Bodens des Batterieunterbringungsteils (10) vorspringt.

4. Reitsitz-Fahrzeug (100) nach Anspruch 3,
wobei die Kraftstoff-Sprühvorrichtung (44) einen Vergaser (44a) umfasst und
die Stütze (14) in der Form einer Platte konfiguriert ist und der Teil zum Stützen der Batterie (12) auf einer unteren Fläche derselben im Verhältnis zu dem Vergaser (44a) ausgespart ist.

5. Reitsitz-Fahrzeug (100) nach Anspruch 2,
wobei die Kraftstoff-Sprühvorrichtung (44) eine Kraftstoff-Einspritzanlage (44b) umfasst und
die Stütze (14) derart konfiguriert ist, dass eine obere Fläche derselben bündig mit dem Boden des Batterieunterbringungsteils (10) ist.

6. Reitsitz-Fahrzeug (100) nach einem der Ansprüche 2 bis 5, wobei die Stütze (14) aus mehreren Stützen ausgewählt wird, die dafür eingerichtet sind, die Batterie (12) in Unterschiedlichen Höhen innerhalb des Batterieunterbringungsteils (10) zu stützen.

7. Reitsitz-Fahrzeug (100) nach einem der vorhergehenden Ansprüche, wobei ein Scharnier (32) zum drehbaren Stützen des Sitzes (30) an einem oberen Teil des Batterieunterbringungsteils (10) geformt ist.

8. Reitsitz-Fahrzeug (100) nach einem der vorhergehenden Ansprüche, wobei ein Deckel (24), der als ein Teil einer Innenwand des Helmunterbringungskastens (20) dient, an einer Grenze zwischen dem Batterieunterbringungsteil (10) und dem Helmunterbringungskasten (20) bereitgestellt wird.

9. Reitsitz-Fahrzeug (200) nach einem der vorhergehenden Ansprüche, das ferner Folgendes umfasst:
eine elektrische Einrichtung (112), die um den Helmunterbringungskasten (120) angeordnet und durch eine Leitung (152) mit einer Batterie (142) verbunden ist, die innerhalb des Batterieunterbringungsteils (140) angeordnet ist,
eine erste Kupplung (170a), die mit dem Ende einer Verkabelung (154a) verbunden ist, die sich von der elektrischen Einrichtung (112) aus erstreckt, und
eine Kupplungshalterung (172) zum Befestigen der ersten Kupplung (170a),
wobei der Batterieunterbringungsteil (140) mit dem Helmunterbringungskasten (120) verbunden ist,
die elektrische Einrichtung (112) in einem Elektroeinrichtungsunterbringungsteil (110) untergebracht ist, der mit dem Helmunterbringungskasten (120) verbunden ist, und
die erste Kupplung (170a), die an der Kupplungshalterung (172) befestigt ist, mit einer zweiten Kupplung verbunden ist, die mit dem Ende einer Verkabelung verbunden ist, die sich von einem äußeren Element aus erstreckt.

10. Reitsitz-Fahrzeug (200) nach Anspruch 9,
wobei die elektrische Einrichtung (112) ein Anlasserrelais (112a) umfasst und
das äußere Element einen Anlassermotor umfasst, der an den Motor (162) des Reitsitz-Fahrzeugs (200) gekoppelt ist.

11. Reitsitz-Fahrzeug (200) nach Anspruch 9 oder 10, wobei eine Klammer (178) zum Festhaken eines hinteren Teils eines Gehäuses (174) der ersten Kupplung (170a) an der Kupplungshalterung (172) geformt ist

12. Reitsitz-Fahrzeug (200) nach Anspruch 9, 10 oder 11,
wobei ein Verriegelungselement (171) zum Verriegeln eines mittleren Teils (179) eines Gehäuses (174) der ersten Kupplung (170a) durch Umschließen des mittleren Teils (179) an der Kupplungshalterung (172) bereitgestellt wird,
ein vorspringender Abschnitt (173) an dem Gehäuse (174) der ersten Kupplung (170a) geformt ist und
eine Rille (176) zum Führen der ersten Kupplung (170a) durch Einpassen des an der ersten Kupplung (170a) geformten vorspringenden Abschnitts (173) an dem Verriegelungselement (171) geformt ist.

13. Reitsitz-Fahrzeug (200) nach einem der Ansprüche 9 bis 12,
wobei ein erster innerer Deckel (146) zwischen dem Helmunterbringungskasten (120) und dem Batterieunterbringungsteil (140) bereitgestellt wird und
ein zweiter innerer Deckel (116) zwischen dem Helmunterbringungskasten (120) und dem Elektroeinrichtungsunterbringungsteil (110) bereitgestellt wird.

14. Reitsitz-Fahrzeug (200) nach Anspruch 13, wobei der erste innere Deckel (146) und der zweite innere Deckel (116) jeweils durch ein Befestigungselement an dem Helmunterbringungskasten (120) befestigt sind.

15. Reitsitz-Fahrzeug (200) nach Anspruch 13 oder 14,
wobei der Batterieunterbringungsteil (140) auf einer Seite des Helmunterbringungskastens (120) angeordnet ist,
der Elektroeinrichtungsunterbringungsteil (110) auf dem Boden des Helmunterbringungskastens (120) angeordnet ist und
ein Polsterelement (118), das dafür eingerichtet ist, durch einen innerhalb des Helmunterbringungskastens (120) aufgenommenen Helm in Eingriff genommen zu werden, auf einer Fläche wenigstens eines von dem ersten und dem zweiten inneren Deckel (146, 116) bereitgestellt wird.

## Revendications

1. Véhicule (100) de type monté à califourchon, comprenant:
un siège (30);
une boîte de rangement de casque (20) disposée sous le siège (30) et comportant une ouverture (22) au niveau d'une surface supérieure pour permettre l'introduction et le retrait d'un casque;
un moteur (40) disposé devant et en dessous de la boîte de rangement de casque (20);
un dispositif de pulvérisation de carburant (44) pour alimenter le moteur (40) en carburant, disposé obliquement et vers l'avant au-dessus du moteur (40), le dispositif de pulvérisation de carburant (44) étant situé, au moins en partie, devant le moteur (40) lorsque le véhicule (100) est vu de côté; et
une partie de logement de batterie (10) disposée devant la boîte de rangement de casque (20) et positionnée au-dessus du dispositif de pulvérisation de carburant (44); dans lequel
le moteur (40) est intégré avec une boîte de transmission (66) dans une unité d'entraînement qui est couplée à un cadre de châssis de véhicule (60) d'une manière permettant une oscillation dans une direction verticale par le biais d'une tige de pivot au voisinage du moteur (40); et
le dispositif de pulvérisation de carburant (44), qui constitue une partie de l'unité d'entraînement et est adapté pour osciller dans la direction verticale en suivant les oscillations de l'unité d'entraînement, est prévu au-dessous d'une extrémité antérieure du siège (30) et la partie de logement de batterie (10) est prévue dans un espace entre le dispositif de pulvérisation de carburant (44) et le siège (30).

2. Véhicule (100) de type monté à califourchon selon la revendication 1,
dans lequel la partie de logement de batterie (10) définit un trou de fond (15) passant à travers une surface de fond de celle-ci et
un support (14) pour supporter une batterie (12) est attaché de manière amovible pour couvrir, au moins partiellement, le trou de fond (15).

3. Véhicule (100) de type monté à califourchon selon la revendication 2, dans lequel le support (14) est configuré de telle sorte que seule une partie servant à supporter la batterie (12) fait partiellement saillie au-dessus du fond de la partie de logement de batterie (10).

4. Véhicule (100) de type monté à califourchon selon la revendication 3,
dans lequel le dispositif de pulvérisation de carburant (44) comprend un carburateur (44a) et
le support (14) est configuré en forme de panneau et la partie servant à supporter la batterie (12) sur une surface de fond de celle-ci est évidée d'une manière correspondant au carburateur (44a).

5. Véhicule (100) de type monté à califourchon selon la revendication 2,
dans lequel le dispositif de pulvérisation de carburant (44) comprend un système d'injection de carburant (44b) et
le support (14) est configuré de telle sorte qu'une surface supérieure du support est globalement de niveau avec le fond de la partie de logement de batterie (10).

6. Véhicule (100) de type monté à califourchon selon l'une quelconque des revendications 2 à 5, dans lequel le support (14) est choisi parmi une pluralité de supports adaptés pour supporter la batterie (12) à différentes hauteurs dans la partie de logement de batterie (10).

7. Véhicule (100) selon l'une quelconque des revendications précédentes, dans lequel une charnière (32) permettant de supporter le siège (30) de manière rotative est formée au niveau d'une partie supérieure de la partie de logement de batterie (10).

8. Véhicule (100) de type monté à califourchon selon l'une quelconque des revendications précédentes, dans lequel un couvercle (24) constituant une partie d'une paroi intérieure de la boîte de rangement de casque (20) est prévu au niveau d'une limite entre la partie de logement de batterie (10) et la boîte de rangement de casque (20).

9. Véhicule (200) de type monté à califourchon selon l'une quelconque des revendications précédentes, comprenant, en outre:
un équipement électrique (112) disposé autour de la boîte de rangement de casque (120) et raccordé à une batterie (142) disposée à l'intérieur de la partie de logement de batterie (140) au moyen d'un câble (152);
un premier coupleur (170a) connecté à l'extrémité d'un câble (154a) s'étendant depuis l'équipement électrique (112); et
un élément de retenue de coupleur (172) pour fixer le premier coupleur (170a),
dans lequel la partie de logement de batterie (140) est reliée à la boîte de rangement de casque (120),
l'équipement électrique (112) est logé dans une partie de logement d'équipement électrique (110) reliée à la boîte de rangement de casque (120) et
le premier coupleur (170a) fixé sur l'élément de retenue de coupleur (172) est connecté à un second coupleur connecté à l'extrémité d'un câble s'étendant depuis un élément extérieur.

10. Véhicule (200) de type monté à califourchon selon la revendication 9,
dans lequel l'équipement électrique (112) comprend un relais de démarreur (112a) et
l'élément extérieur comprend un moteur de démarreur couplé au moteur (162) du véhicule (200) de type monté à califourchon.

11. Véhicule (200) de type monté à califourchon selon la revendication 9 ou 10, dans lequel un crochet (178) pour accrocher une partie postérieure d'un boîtier (174) du premier coupleur (170a) est formé sur l'élément de retenue de coupleur (172).

12. Véhicule (200) de type monté à califourchon selon la revendication 9, 10 ou 11,
dans lequel un élément de verrou (171) pour verrouiller une partie centrale (179) d'un boîtier (174) du premier coupleur (170a) en entourant la partie centrale (179) est prévu sur l'élément de retenue de coupleur (172),
une partie saillante (173) est formée sur le boîtier (174) du premier coupleur (170a) et
une rainure (176) pour guider le premier coupleur (170a) en insérant la partie saillante (173) formée sur le premier coupleur (170a) est formée sur l'élément de verrou (171).

13. Véhicule (200) de type monté à califourchon selon l'une quelconque des revendications 9 à 12,
dans lequel un premier couvercle intérieur (146) est prévu entre la boîte de rangement de casque (120) et la partie de logement de batterie (140) et
un second couvercle intérieur (116) est prévu entre la boîte de rangement de casque (120) et la partie de logement d'équipement électrique (110).

14. Véhicule (200) de type monté à califourchon selon la revendication 13, dans lequel le premier couvercle intérieur (146) et le second couvercle intérieur (116) sont fixés sur la boîte de rangement de casque (120), respectivement, au moyen d'un élément de fixation.

15. Véhicule (200) de type monté à califourchon selon la revendication 13 ou 14,
dans lequel la partie de logement de batterie (140) est disposée sur un côté de la boîte de rangement de casque (120),
la partie de logement de l'équipement électrique (110) est disposée sur le fond de la boîte de rangement de casque (120), et
un élément formant coussin (118) adapté pour être en contact avec un casque reçu à l'intérieur de la boîte de rangement de casque (120) est prévu sur une surface d'au moins un des premier et second couvercles intérieurs (146, 116).
